# EUROPEAN PATENT APPLICATION

(11) **EP 4 178 118 A1**
(43) Date of publication of application: **10.05.2023**
(21) Application number: 22205008.0
(22) Date of filing: 02.11.2022
(51) Int. Cl.: H04B 1/7163, H04W 52/00

(54) **RECEIVER CIRCUIT FOR DETECTING AND WAKING UP TO A WAKEUP IMPULSE SEQUENCE**

(30) Priority: 03.11.2021 US 202163275139 P; 08.08.2022 US 202217883048
(71) Applicant: Qorvo US, Inc., Greensboro, NC 27409 (US)
(72) Inventor: McLaughlin, Michael, Dublin (IE); Bunch, Ryan, Greensboro (US); Granger-Jones, Marcus, San Jose (US); Hawawini, Shadi, San Jose (US)
(74) Representative: D Young & Co LLP

(57) **Abstract**

A receiver circuit for detecting and waking up to a wakeup impulse sequence is provided. Herein, a transmitter circuit is configured to transmit a wakeup impulse sequence to wake up a receiver circuit. The receiver circuit includes a main receiver circuit and a wakeup receiver circuit. The main receiver circuit, which consumes far more energy than the wakeup receiver circuit, will remain in sleep mode as much as possible to conserve power. While the main receiver circuit is asleep, the wakeup receiver circuit is configured to detect the wakeup impulse sequence and wake up the main receiver circuit if the wakeup impulse sequence is intended for the receiver circuit. By keeping the main receiver circuit asleep as much as possible, it is possible to reduce power consumption, thus making the receiver circuit an ideal receiver option for an Internet-of-Things (loT) device(s).

## Description

### Related Applications

This application claims the benefit of U.S. provisional patent application serial number 63/275,139, filed on November 3, 2021, the disclosure of which is incorporated herein by reference in its entirety.

### Field of the Disclosure

The technology of the disclosure relates generally to waking up a receiver circuit via a wakeup impulse sequence, such as an ultra-wideband (UWB) wakeup sequence.

### Background

Ultra-wideband (UWB) is an Institute of Electrical and Electronic Engineers (IEEE) 802.15.4a/z standard technology optimized for secure micro-location-based applications. It is capable of measuring distance and location with extended range (e.g., up to 70 meters) and unprecedented accuracy (e.g., within a few centimeters), compared to such traditional narrowband technologies as Wi-Fi and Bluetooth. In addition to location capability, UWB can also offer a data communication pipe of up to 27 Mbps. As such, UWB technology has been widely adopted in today's new smartphones and smart gadgets to enable spatial awareness in places where global positioning service (GPS) based positioning service is unavailable or unreliable and/or for fast and secure data collection from various sensors.

UWB based positioning service is enabled by transmitting a UWB pulse from a UWB transmitter circuit (e.g., smartphone) to a UWB receiver circuit (e.g., a sensor) and calculating the time it takes the UWB pulse to travel between the transmitter circuit and the receiver circuit. The UWB pulse is typically 2 nanoseconds (ns) wide and has clean edges, thus making it highly immune to a reflected signal (e.g., multipath) and allowing a precise determination of arrival time and distance in a multipath radio environment (e.g., an indoor environment).

The UWB receiver circuit is typically powered by embedded batteries. As such, most UWB receiver circuits stay in power-saving mode (e.g., doze mode) most of the time to conserve energy and will only wake up in response to detecting a wakeup signal. A conventional UWB receiver circuit typically includes a narrowband radio circuit (e.g., Bluetooth or ZigBee) for the purpose of detecting the wakeup signal. Understandably, the additional narrowband radio circuit not only increases footprint of the UWB receiver circuit, but also contributes to increases in cost and power consumption. As such, it is desirable to wake up the UWB receiver circuit without employing the narrowband radio circuit.

### Summary

Particular aspects are set out in the appended independent claims. Various optional embodiments are set out in the dependent claims.

Embodiments of the disclosure relate to a receiver circuit for detecting and waking up to a wakeup impulse sequence. In embodiments disclosed herein, a transmitter circuit is configured to transmit a wakeup impulse sequence to wake up a receiver circuit. The receiver circuit includes a main receiver circuit and a wakeup receiver circuit. The main receiver circuit, which consumes far more energy than the wakeup receiver circuit, will remain in sleep mode as much as possible to conserve power. While the main receiver circuit is asleep, the wakeup receiver circuit is configured to detect the wakeup impulse sequence and wake up the main receiver circuit if the wakeup impulse sequence is intended for the receiver circuit. By keeping the main receiver circuit asleep as much as possible, it is possible to reduce power consumption, thus making the receiver circuit an ideal receiver option for an Internet-of-Things (loT) device(s).

In one aspect, a receiver circuit is provided. The receiver circuit includes a main receiver circuit. The receiver circuit also includes a wakeup receiver circuit. The wakeup receiver circuit is configured to detect a wakeup impulse sequence received by an antenna circuit. The wakeup receiver circuit is also configured to determine whether the wakeup impulse sequence is intended to wake up the receiver circuit. The wakeup receiver circuit is also configured to wake up the main receiver circuit in the receiver circuit in response to determining that the wakeup impulse sequence is intended to wake up the receiver circuit.

In another aspect, a wireless communication system is provided. The wireless communication system includes a transmitter circuit. The transmitter circuit is configured to transmit a wakeup impulse sequence. The wireless communication system also includes a receiver circuit. The receiver circuit includes a main receiver circuit. The receiver circuit also includes a wakeup receiver circuit. The wakeup receiver circuit is configured to detect the wakeup impulse sequence received by an antenna circuit. The wakeup receiver circuit is also configured to determine whether the wakeup impulse sequence is intended to wake up the receiver circuit. The wakeup receiver circuit is also configured to wake up the main receiver circuit in the receiver circuit in response to determining that the wakeup impulse sequence is intended to wake up the receiver circuit.

In another aspect, a transmitter circuit is provided. The transmitter circuit is configured to transmit a wakeup impulse signal to a receiver circuit. The wakeup impulse signal includes a preamble. The preamble includes multiple preamble symbols each comprising a pulse burst.

Those skilled in the art will appreciate the scope of the present disclosure and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the disclosure, and together with the description serve to explain the principles of the disclosure.
Figure 1 is a schematic diagram of an example wireless communication system wherein a transmitter circuit is configured according to embodiments of the present disclosure to wake up a receiver circuit via a wakeup impulse sequence;
Figures 2A and 2B are examples of the wakeup impulse sequence in Figure 1;
Figure 3 is a schematic diagram providing an example illustration of the receiver circuit in the wireless communication system of Figure 1;
Figure 4 is a schematic diagram of an example wakeup signal detector circuit, which can be provided in the receiver circuit in Figures 1 and 3 to detect the wakeup impulse sequence; and
Figures 5 is a schematic diagram of a multi-path filter circuit, which can be provided in the wakeup signal detector circuit of Figure 4.

### Detailed Description

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over the other element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments of the disclosure relate to a receiver circuit for detecting and waking up to a wakeup impulse sequence. In embodiments disclosed herein, a transmitter circuit is configured to transmit a wakeup impulse sequence to wake up a receiver circuit. The receiver circuit includes a main receiver circuit and a wakeup receiver circuit. The main receiver circuit, which consumes far more energy than the wakeup receiver circuit, will remain in sleep mode as much as possible to conserve power. While the main receiver circuit is asleep, the wakeup receiver circuit is configured to detect the wakeup impulse sequence and wake up the main receiver circuit if the wakeup impulse sequence is intended for the receiver circuit. By keeping the main receiver circuit asleep as much as possible, it is possible to reduce power consumption, thus making the receiver circuit an ideal receiver option for an Internet-of-Things (loT) device(s).

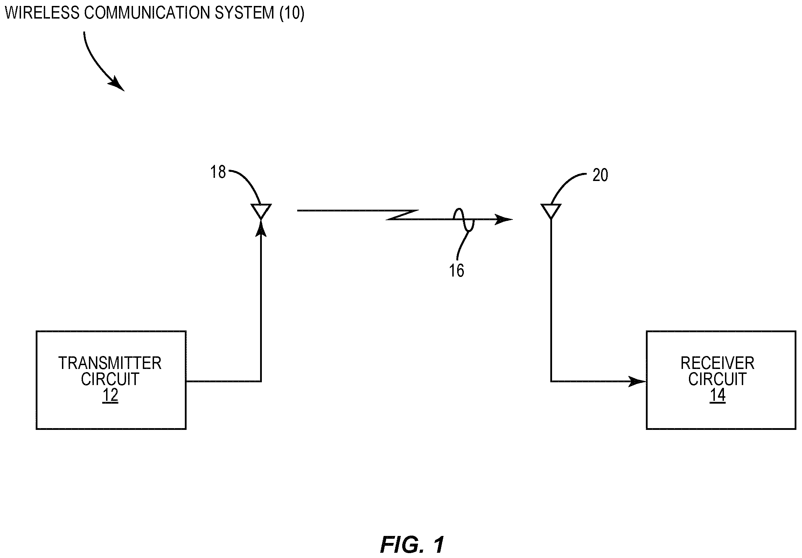

Figure 1 is a schematic diagram of an example wireless communication system 10 wherein a transmitter circuit 12 is configured according to embodiments of the present disclosure to wake up a receiver circuit 14 via a wakeup impulse sequence 16. The transmitter circuit 12 can be configured to transmit the wakeup impulse sequence 16 via a transmit antenna circuit 18 and the receiver circuit 14 can be configured to receive the wakeup impulse sequence 16 via a receive antenna circuit 20. Notably, each of the transmit antenna circuit 18 and the receive antenna circuit 20 can include one or more antennas of any suitable type and be arranged in any suitable configuration.

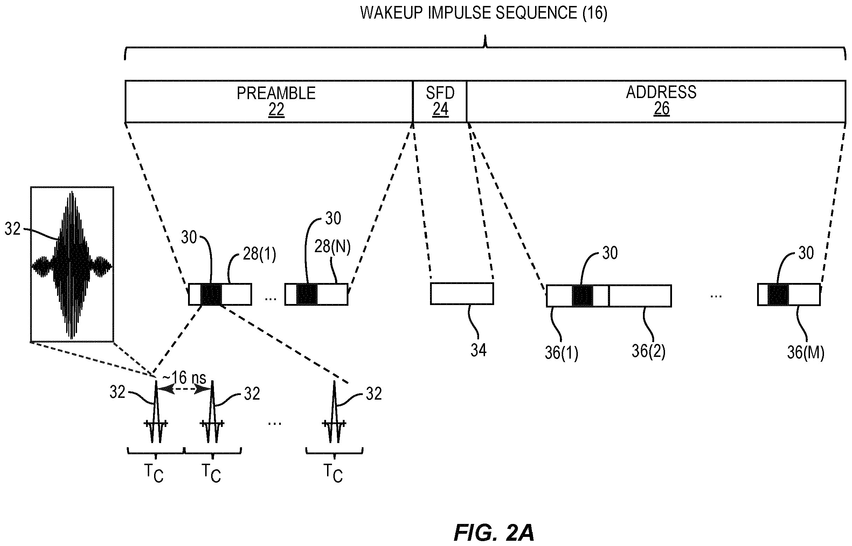

The wakeup impulse sequence 16 is a special sequence with a sole purpose of waking up the receiver circuit 14. Figure 2A is a block diagram illustrating a general structure of the wakeup impulse sequence 16 in Figure 1.

Specifically, the wakeup impulse sequence 16 includes a preamble 22, a start frame delimiter (SFD) 24 (a.k.a. start bit), and an address 26. The preamble 22 includes multiple preamble symbols 28(1)-28(N). In a non-limiting example, each of the preamble symbols 28(1)-28(N) has a symbol duration of one millisecond (1 ms). Each of the preamble symbols 28(1)-28(N) includes a pulse burst 30. In a non-limiting example, the pulse burst 30 has a burst duration of four microseconds (4 *µ*s), which is substantially shorter (0.4% or 1/250) of the symbol duration. In another non-limiting example, the pulse burst 30 has a burst duration of eight microseconds (8 *µ*s), which is substantially shorter (0.8% or 1/125) than the symbol duration. The pulse burst 30 can be divided into multiple chip intervals Tc, each having a chip duration of approximately sixteen nanoseconds (16 ns). Each of the chip intervals Tc can further include a pulse 32 that is approximately two nanoseconds (2 ns) in duration. The exact choice of the chip interval Tc may not be important, but it is very important that the chip interval Tc be constant during the pulse burst 30. A constant chip interval Tc, results in a very narrow detection frequency with corresponding harmonics to be produced by the envelope detector (62) and concentrates the energy into a small spectral region and the corresponding harmonics. The usual choice of preamble sequence for UWB is an Ipatov sequence (e.g., in 802.15.4a and 802.15.4z). An Ipatov sequences does not use a constant chip interval Tc between pulses and as a result would not perform as well as embodiments disclosed herein (e.g., using a sequence with a constant chip interval Tc between pulses). The polarity of the pulses does not affect the output of the envelope detector (62) and so may be chosen by using many of the well-known sequences that provide good spectral whitening (e.g., m-sequences). In this regard, the pulses 32 in the pulse burst 30 are spaced at approximately 16 ns. Each of the pulses 32 in the pulse burst 30 may be gaussian shaped pulses.

The SFD 24 includes a single start bit symbol 34 and the address 26 includes multiple address symbols 36(1)-36(M). Like the preamble symbols 28(1)-28(N), each of the single start bit symbol 34 and the address symbols 36(1)-36(M) is also 1 ms in duration. In a non-limiting example, the preamble symbols 28(1)-28(N), the single start bit symbol 34, and the address symbols 36(1)-36(M) are all modulated based on an on-off-key (OOK) modulation. In this regard, a presence of the pulse burst 30 in any of the preamble symbols 28(1)-28(N), the single start bit symbol 34, and the address symbols 36(1)-36(M) would represent a binary one "1." In contrast, an absence of the pulse burst 30 in any of the preamble symbols 28(1)-28(N), the single start bit symbol 34, and the address symbols 36(1)-36(M) would represent a binary zero "0."

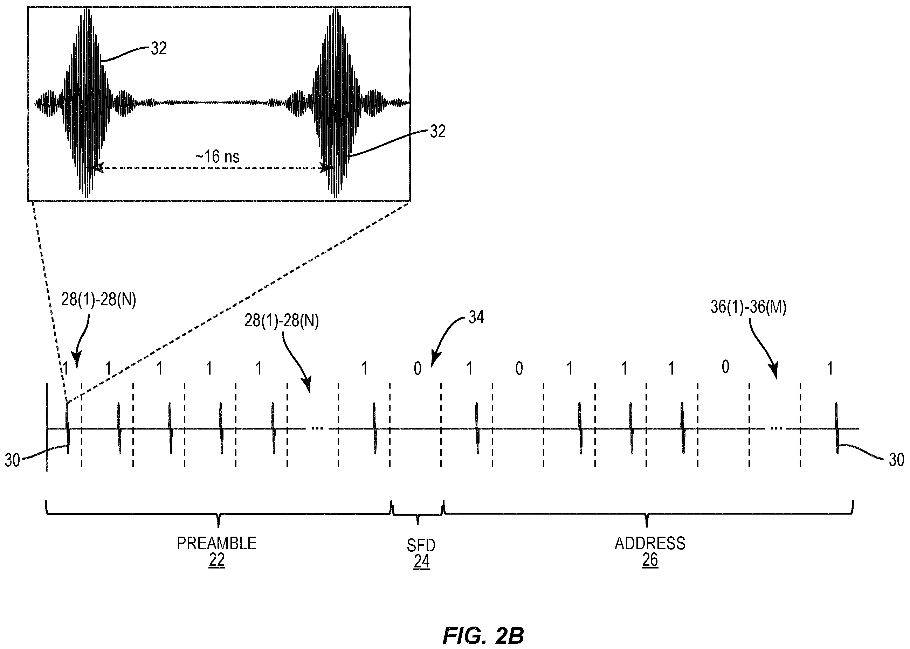

Figure 2B is an example of the wakeup impulse sequence 16 of Figure 2A configured according to an embodiment of the present disclosure. Common elements between Figures 2A and 2B are shown therein with common element numbers and will not be re-described herein.

Herein, each of the preamble symbols 28(1)-28(N) is OOK modulated to include the pulse burst 30, while the start bit symbol 34 is OOK modulated not to include the pulse burst 30. In this regard, each of the preamble symbols 28(1)-28(N) is modulated to represent the binary "1" and the start bit symbol 34 is modulated to represent the binary "0." In a non-limiting example, the preamble 22 can include twenty (20) consecutive preamble symbols 28(1)-28(20) to thereby provide the preamble 22 with twenty consecutive binary "1s." In this regard, once the receiver circuit 14 detects the binary "0" after multiple consecutive binary "1s," it is an indication of the SFD 24.

Each of the address symbols 36(1)-36(M), on the other hand, can be OOK modulated to include or not include the pulse burst 30. The address 26 may include any number of the address symbols 36(1)-36(M), which can be preprogrammed in the receiver circuit 14. In this regard, the receiver circuit 14 can detect the preprogrammed number of the address symbols 36(1)-36(M) after detecting the start bit symbol 34. The address 26 in the wakeup impulse sequence 16 indicates a receiver identification of the receiver circuit the transmitter circuit 12 intends to wake up via the wakeup impulse sequence 16. To differentiate from the preamble 22, which includes consecutive binary "1s," the address 26 may include some form of coding redundancy (e.g., parity, cyclic redundancy check, etc.).

In this regard, the transmitter circuit 12 is configured to transmit the pulse burst 30 in each of the preamble symbols 28(1)-28(20). The transmitter circuit 12 may apply an extra gain of 24 dB in the example where the burst duration is 4 *µ*s or 21 dB in the example where the burst duration is 8 *µ*s to the wakeup impulse sequence 16 to thereby boost an average power of the wakeup impulse sequence 16 to, for example, - 14.3 dBm. The transmitter circuit 12 may also generate the pulse burst 30 in the preamble symbols 28(1)-28(20) in pseudo-random polarity and with good autocorrelation properties. In this regard, for the example where the burst duration is 4 *µ*s since each of the preamble symbols 28(1)-28(20) can accommodate up to 250 pulses in the burst 30, the pulse burst 30 in each of the preamble symbols 28(1)-28(20) can carry 37 nanojoules (nJ) of energy and as a result each pulse can carry up to 148 picojoules(pJ). Also in this regard, for the example where the burst duration is 8 *µ*s, each of the preamble symbols 28(1)-28(20) can accommodate up to 500 pulses in the burst 30, the pulse burst 30 in each of the preamble symbols 28(1)-28(20) can carry 37 nanojoules (nJ) of energy and as a result each pulse can carry up to 74 picojoules(pJ). The choice of burst length may be a tradeoff. The shorter the burst, the more energy that can be imparted to the individual pulses and the greater the range, but this may be limited in practice by the achievable pulse power that the circuitry can deliver and as a result, the longer burst may be preferable despite the reduced range.

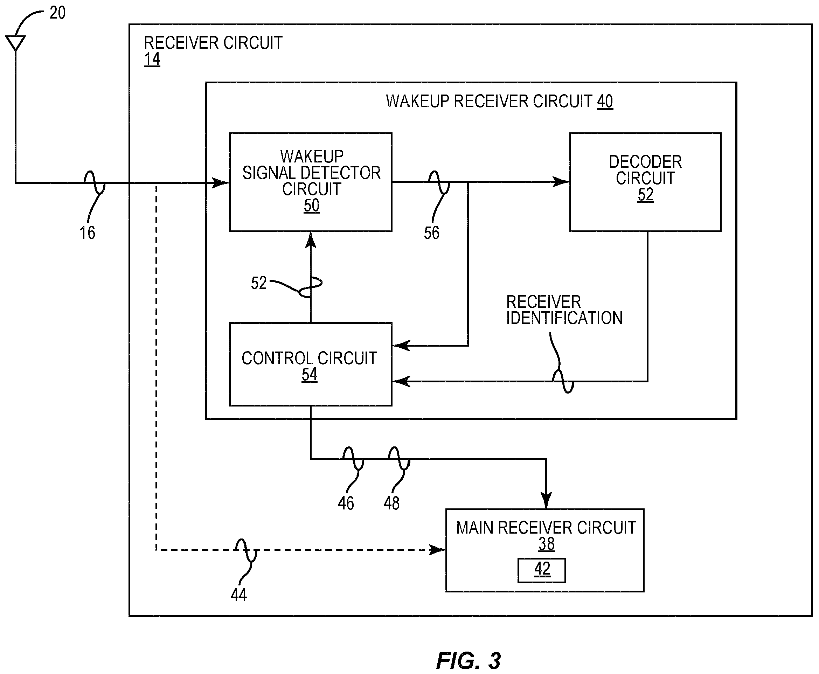

Figure 3 is a schematic diagram providing an example illustration of the receiver circuit 14 in the wireless communication system 10 of Figure 1. Common elements between Figures 1 and 3 are shown therein with common element numbers and will not be re-described herein.

The receiver circuit 14 includes a main receiver circuit 38 and a wakeup receiver circuit 40. The main receiver circuit 38 implements ultra-wideband (UWB) physical (PHY) and medium access control (MAC) layer protocols as defined in the Institute of Electrical and Electronic Engineers (IEEE) 802.15.4a/z standard. In this regard, the main receiver circuit 38 is a UWB receiver circuit, which implements a UWB protocol stack 42 and is operable to receive a UWB signal 44. Since the main receiver circuit 38 supports the entire UWB protocol stack 42, the main receiver circuit 38 will understandably consume more energy (a.k.a. battery power) whenever the main receiver circuit 38 is active and operational. As such, it is desirable to keep the main receiver circuit 38 in sleep (a.k.a. power saving) mode as much as possible, only to be woken up as necessary.

The wakeup receiver circuit 40, on the other hand, will consume far less energy than the main receiver circuit 38. As such, the wakeup receiver circuit 40 will be operational to monitor the wakeup impulse sequence 16 transmitted from the transmitter circuit 12. In an embodiment, the wakeup receiver circuit 40 may wake up periodically to detect the wakeup impulse sequence 16 to help further reduce power consumption of the receiver circuit 14.

When the wakeup receiver circuit 40 detects the wakeup impulse sequence 16, the wakeup receiver circuit 40 will attempt to decode the address 26 in the wakeup impulse sequence 16 to determine whether the wakeup impulse sequence 16 is intended to wake up the receiver circuit 14. When the wakeup receiver circuit 40 determines that the wakeup impulse sequence 16 is indeed intended to wake up the receiver circuit 14, the wakeup receiver circuit 40 will generate a wakeup signal 46 to wake up the main receiver circuit 38. By keeping the main receiver circuit 38 asleep as much as possible, it is possible to reduce power consumption, thus making the receiver circuit 14 an ideal receiver option for an loT device(s).

In an embodiment, the wakeup receiver circuit 40 may be turned off when the main receiver circuit 38 is operational. In this regard, the main receiver circuit 38 may send an indication signal 48 to wake up the wakeup receiver circuit 40 when the main receiver circuit 38 is returning to the sleep mode.

In an embodiment, the wakeup receiver circuit 40 includes a wakeup signal detector circuit 50, a decoder circuit 52, and a control circuit 54. The wakeup signal detector circuit 50 is configured to detect the preamble symbols 28(1)-28(N), the start bit symbol 34, and the address symbols 36(1)-36(M) in the wakeup impulse sequence 16. In an embodiment, the wakeup signal detector circuit 50 is configured to output a signal detection indication 56 to indicate to the decoder circuit 52 and the control circuit 54 as to whether the pulse burst 30 is present or absent in any of the preamble symbols 28(1)-28(N), the start bit symbol 34, and the address symbols 36(1)-36(M). The decoder circuit 52 is configured to decode the address 26 based on a presence or absence of the pulse burst 30 in the address symbols 36(1)-36(M) to obtain the receiver identification and send the obtained receiver identification to the control circuit 54.

The control circuit 54, which can be a synthesized logic, as an example, is configured to check the receiver identification indicated by the address 26 to determine whether the wakeup impulse sequence 16 is intended to wake up the receiver circuit 14. If the receiver identification indicated by the address 26 matches the identification of the receiver circuit 14, the control circuit 54 can conclude that the wakeup impulse sequence 16 is intended to wake up the receiver circuit 14. Accordingly, the control circuit 54 can generate the wakeup signal 46 to wake up the main receiver circuit 38.

As mentioned earlier, the wakeup receiver circuit 40 may be turned on periodically or when the main receiver circuit 38 returns to the sleep mode. Moreover, the wakeup receiver circuit 40 may not have an internal clock that is precisely synchronized with a clock in the transmitter circuit 12. As such, the wakeup receiver circuit 40 may be turned on anywhere during the preamble 22. In other words, the wakeup receiver circuit 40 may not always be turned on exactly at the start of the first preamble symbol 28(1). In addition, since the duration of the pulse burst 30 is far shorter than the duration of any of the preamble symbols 28(1)-28(N), the wakeup receiver circuit 40 may not know where exactly the pulse burst 30 is located inside any of the preamble symbols 28(1)-28(N).

Fortunately, the embodiment disclosed herein does not require the wakeup receiver circuit 40 to detect all the preamble symbols 28(1)-28(N). In fact, the wakeup receiver circuit 40 can still carry out the intended operation by detecting a subset of the preamble symbols 28(1)-28(N). As such, whenever the wakeup receiver circuit 40 is turned on, the wakeup signal detector circuit 50 must stay on long enough to detect the pulse burst 30 in any of the preamble symbols 28(1)-28(N). Thereafter, the wakeup signal detector circuit 50 can correctly detect remaining preamble symbols among the preamble symbols 28(1)-28(N), the start bit symbol 34, and the address symbols 36(1)-36(M).

Suppose that the preamble 22 includes twenty preamble symbols 28(1)-28(20) and the wakeup receiver circuit 40 is turned on during or slightly before the preamble symbol 28(10). The wakeup signal detector circuit 50 will stay on until the pulse burst 30 in the preamble symbol 28(10) (also referred to as "first preamble symbol" in this example) is detected. Accordingly, the wakeup signal detector circuit 50 can output the signal detection indication 56 to indicate the presence of the pulse burst 30 in the preamble symbol 28(10).

In an embodiment, the pulse burst 30 may be modulated at a substantially identical location in each of the preamble symbols 28(1)-28(20). As such, after detecting the first pulse burst 30 in the preamble symbol 28(10), the control circuit 54 may estimate a predicted location of the pulse burst 30 in each of the subsequent preamble symbols 28(11)-28(20) and determine a power-saving duty cycle based on the predicted location of the pulse burst 30 in the subsequent preamble symbols 28(11)-28(20). Accordingly, the control circuit 54 can cause the wakeup signal detector circuit 50 to sleep in between the pulse burst 30 in the subsequent preamble symbols 28(11)-28(20) to further reduce power consumption. In an embodiment, the control circuit 54 may cause the wakeup signal detector circuit 50 to wake up slightly ahead of the predicted location of the pulse burst 30 in each of the subsequent preamble symbols 28(11)-28(20) to account for potential jitter of the pulse burst 30.

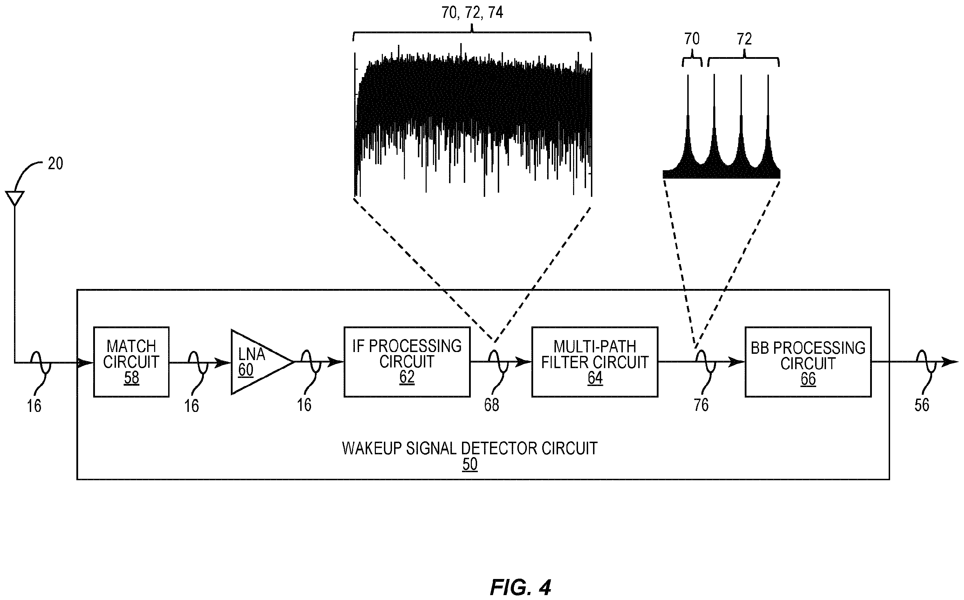

Figure 4 is a schematic diagram providing an example illustration of the wakeup signal detector circuit 50 in the receiver circuit 14 of Figure 3. Common elements between Figures 3 and 4 are shown therein with common element numbers and will not be re-described herein.

In an embodiment, the wakeup signal detector circuit 50 includes a match circuit 58, a low-noise amplifier (LNA) 60, an intermediate frequency (IF) processing circuit 62, a multi-path filter circuit 64, and a baseband processing circuit 66. The match circuit 58 is coupled to the antenna circuit 20 to receive the wakeup impulse sequence 16 and impedance match the antenna 20 to the LNA 60. The LNA 60 is configured to amplify the wakeup impulse sequence 16. The IF processing circuit 62 is configured to convert the wakeup impulse sequence 16 into a multi-tone IF signal 68. In a non-limiting example, an envelope detector (not shown) may be provided in the IF processing circuit 62 to convert the RF signal 16 into the multi-tone IF signal 68. Notably, since the multi-tone IF signal 68 has a narrower bandwidth (e.g., 250 KHz) compared to a much wider bandwidth (e.g., 500 MHz) of the wakeup impulse sequence 16, the multi-tone IF signal 68 can be rich in harmonics and include a large amount of noise. In this regard, the multi-tone IF signal 68 as generated by the IF processing circuit 62 can be a multi-tone signal that includes not only a fundamental response 70, but also multiple harmonic responses 72, and a noise response 74.

In a conventional system, the harmonic responses 72 are deemed undesirable and typically suppressed. However, in the context of the present disclosure, some of the harmonic responses 72 may be preserved such that the respective response energy of the preserved harmonic responses 72 can be summed for the benefit of improved pulse detection sensitivity.

In an embodiment, the multi-path filter circuit 64 can be configured to eliminate one or more of the harmonic responses 72 and suppress the noise response 74 in the multi-tone IF signal 68. Specifically, the multi-path filter circuit 64 is configured to output a filtered IF signal 76, which is also a multi-tone IF signal, that includes the fundamental response 70 and a subset (e.g., up to the third order harmonic) of the harmonic responses 72. The baseband processing circuit 66 will then generate the signal detection indication 56 that indicates the presence or absence of the pulse burst 30 in any of the preamble symbols 28(1)-28(N), the start bit symbol 34, and the address symbols 36(1)-36(M).

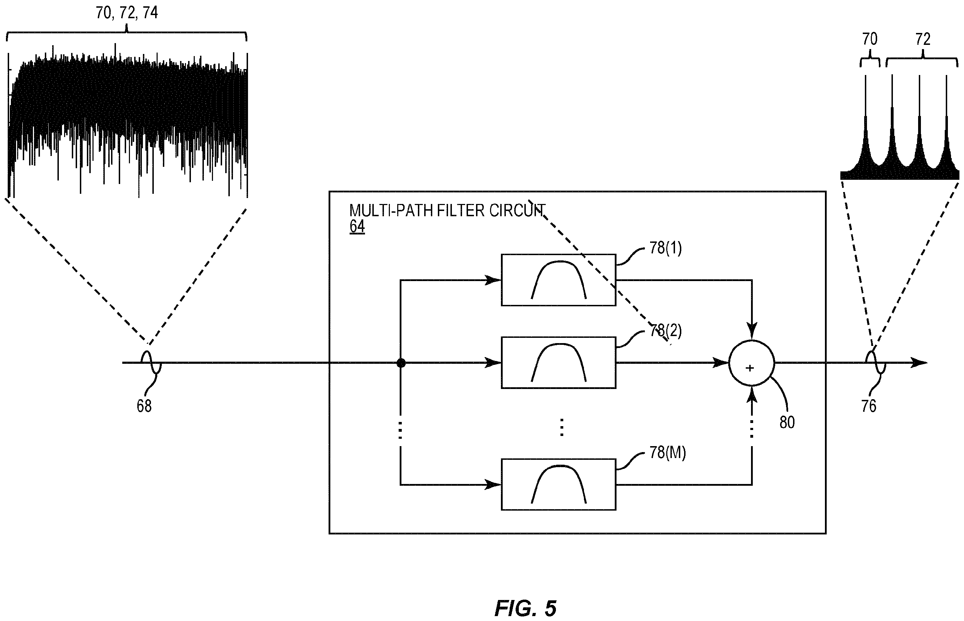

The multi-path filter circuit 64 can be configured according to different embodiments of the present disclosure. Figures 5 is a schematic diagram of the multi-path filter circuit 64 configured according to an embodiment of the present disclosure. Common elements between Figures 4 and 5 are shown therein with common element numbers and will not be re-described herein.

In this embodiment, the multi-path filter circuit 64 can be configured to include multiple BPFs 78(1)-78(M). Each of the BPFs 78(1)-78(M) is tuned to pass a respective one of the fundamental response 70 and the subset of the harmonic responses 72. For example, if the filter IF signal 76 includes three of the harmonic responses 72 in addition to the fundamental response 70, there will be four BPFs 78(1)-78(4) in the multi-path filter circuit 64. Besides passing the fundamental response 70 and the subset of the harmonic responses 72, the BPFs 78(1)-78(M) eliminate or substantially suppress the noise response 74.

The multi-path filter circuit 64 also includes a combiner 80. The combiner 80 is coupled to the BPFs 78(1)-78(M) and is configured to combine the respective response energy of the fundamental response 70 and the subset of the harmonic responses 72 in the filtered IF signal 76.

In an alternative embodiment, the multi-path filter circuit 64 may also be implemented by an N-path filter, which is inherently capable of eliminating the noise response 74 and combining the respective response energy of the fundamental response 70 and the subset of the harmonic responses 72 in the filtered IF signal 76.

Therefore, from one perspective there has been described a receiver circuit for detecting and waking up to a wakeup impulse sequence. In this perspective, a transmitter circuit is configured to transmit a wakeup impulse sequence to wake up a receiver circuit. The receiver circuit includes a main receiver circuit and a wakeup receiver circuit. The main receiver circuit, which consumes far more energy than the wakeup receiver circuit, will remain in sleep mode as much as possible to conserve power. While the main receiver circuit is asleep, the wakeup receiver circuit is configured to detect the wakeup impulse sequence and wake up the main receiver circuit if the wakeup impulse sequence is intended for the receiver circuit. By keeping the main receiver circuit asleep as much as possible, it is possible to reduce power consumption, thus making the receiver circuit an ideal receiver option for an Internet-of-Things (loT) device(s).

Further examples are set out in the following number clauses:
Clause 1. A receiver circuit comprising: a main receiver circuit; and a wakeup receiver circuit configured to: detect a wakeup impulse sequence received by an antenna circuit; determine whether the wakeup impulse sequence is intended to wake up the receiver circuit; and wake up the main receiver circuit in the receiver circuit in response to determining that the wakeup impulse sequence is intended to wake up the receiver circuit.
Clause 2. The receiver circuit of clause 1, wherein the wakeup impulse sequence comprises a preamble, a start bit, and an address each modulated based on on-off-key (OOK) modulation, wherein: the preamble comprises a plurality of preamble symbols each comprising a respective one of a plurality of pulse bursts; the start bit comprises a start bit symbol that does not include the pulse burst; and the address comprises a plurality of address symbols modulated to collectively represent a receiver identification.
Clause 3. The receiver circuit of clause 2, wherein each of the plurality of preamble symbols has a substantially longer duration than the respective one of the plurality of pulse bursts.
Clause 4. The receiver circuit of claim 2 or 3, wherein the wakeup receiver circuit is further configured to: detect one or more of the plurality of pulse bursts in one or more of the plurality of preamble symbols in the preamble, respectively; detect the start bit symbol after detecting the one or more of the plurality of pulse bursts; detect the plurality of address symbols after detecting the start bit; and determine that the wakeup impulse sequence is intended to wake up the receiver circuit in response to determining that the receiver identification represented by the address matches an identification of the receiver circuit.
Clause 5. The receiver circuit of clause 4, wherein the wakeup receiver circuit is further configured to: detect a first pulse burst among the one or more of the plurality of pulse bursts; predict, based on a location of the detected first pulse burst in a first preamble symbol among the one or more of the plurality of preamble symbols, a predicted location of each pulse burst subsequent to the first pulse burst among the one or more of the plurality of pulse bursts in a respective subsequent preamble among the one or more of the plurality of preamble symbols; determine a power-saving duty cycle based on the predicted location of each pulse burst subsequent to the first pulse burst among the one or more of the plurality of pulse bursts; and detect each pulse burst subsequent to the first pulse burst among the one or more of the plurality of pulse bursts based on the determined power-saving duty cycle.
Clause 6. The receiver circuit of any of clauses 2 to 5, wherein the wakeup receiver circuit comprises: a wakeup signal detector circuit configured to detect the plurality of preamble symbols, the start bit symbol, and the plurality of address symbols; a decoder circuit configured to decode the receiver identification represented by the plurality of address symbols; and a control circuit configured to: determine that the wakeup impulse sequence is intended to wake up the receiver circuit in response to the decoded receiver identification identifying the receiver circuit; and generate a wakeup signal to wake up the main receiver circuit.
Clause 7. The receiver circuit of clause 6, wherein the wakeup signal detector circuit comprises: a match circuit configured to impedance match the antenna circuit; a low-noise amplifier (LNA) configured to amplify the received wakeup impulse sequence; an IF processing circuit comprising an envelope detector configured to convert the received wakeup impulse sequence into a multi-tone IF signal comprising a fundamental response, a plurality of harmonic responses, and a noise response; a multi-path filter circuit configured to eliminate one or more of the plurality of harmonic responses and the noise response from the multi-tone IF signal to thereby output a filtered IF signal comprising the fundamental response and a subset of the plurality of harmonic responses; and a baseband processing circuit configured to generate a signal detection indication based on the filtered IF signal.
Clause 8. The receiver circuit of clause 7, wherein the multi-path filter circuit comprises: a plurality of bandpass filters each configured to reject the noise response and pass a respective one of the fundamental response and the subset of the plurality of harmonic responses; and a combiner coupled to the plurality of bandpass filters and configured to output the filtered IF signal comprising the fundamental response and the subset of the plurality of harmonic responses.
Clause 9. The receiver circuit of clause 7 or 8, wherein the multi-path filter circuit is an N-path filter circuit configured to reject the noise response and pass a respective one of the fundamental response and the subset of the plurality of harmonic responses to thereby output the filtered IF signal comprising the fundamental response and the subset of the plurality of harmonic responses.
Clause 10. A wireless communication system comprising: a transmitter circuit configured to transmit a wakeup impulse sequence; and a receiver circuit comprising: a main receiver circuit; and a wakeup receiver circuit configured to: detect the wakeup impulse sequence received by an antenna circuit; determine whether the wakeup impulse sequence is intended to wake up the receiver circuit; and wake up the main receiver circuit in the receiver circuit in response to determining that the wakeup impulse sequence is intended to wake up the receiver circuit.
Clause 11. The wireless communication system of clause 10, wherein the wakeup impulse sequence comprises a preamble, a start bit, and an address each modulated based on on-off-key (OOK) modulation, wherein: the preamble comprises a plurality of preamble symbols each comprising a respective one of a plurality of pulse bursts; the start bit comprises a start bit symbol that does not include the pulse burst; and the address comprises a plurality of address symbols modulated to collectively represent a receiver identification.
Clause 12. The wireless communication system of clause 11, wherein each of the plurality of preamble symbols has a substantially longer duration than the respective one of the plurality of pulse bursts.
Clause 13. The wireless communication system of clause 11 or 12, wherein the wakeup receiver circuit is further configured to: detect one or more of the plurality of pulse bursts in one or more of the plurality of preamble symbols in the preamble, respectively; detect the start bit symbol after detecting the one or more of the plurality of pulse bursts; detect the plurality of address symbols after detecting the start bit; and determine that the wakeup impulse sequence is intended to wake up the receiver circuit in response to determining that the receiver identification represented by the address matches an identification of the receiver circuit.
Clause 14. The wireless communication system of clause 13, wherein the wakeup receiver circuit is further configured to: detect a first pulse burst among the one or more of the plurality of pulse bursts; predict, based on a location of the detected first pulse burst in a first preamble symbol among the one or more of the plurality of preamble symbols, a predicted location of each pulse burst subsequent to the first pulse burst among the one or more of the plurality of pulse bursts in a respective subsequent preamble among the one or more of the plurality of preamble symbols; determine a power-saving duty cycle based on the predicted location of each pulse burst subsequent to the first pulse burst among the one or more of the plurality of pulse bursts; and detect each pulse burst subsequent to the first pulse burst among the one or more of the plurality of pulse bursts based on the determined power-saving duty cycle.
Clause 15. The wireless communication system of any of clauses 11 to 14, wherein the wakeup receiver circuit comprises: a wakeup signal detector circuit configured to detect the plurality of preamble symbols, the start bit symbol, and the plurality of address symbols; a decoder circuit configured to decode the receiver identification represented by the plurality of address symbols; and a control circuit configured to: determine that the wakeup impulse sequence is intended to wake up the receiver circuit in response to the decoded receiver identification identifying the receiver circuit; and generate a wakeup signal to wake up the main receiver circuit.
Clause 16. The wireless communication system of clause 15, wherein the wakeup signal detector circuit comprises: a match circuit configured to impedance match the antenna circuit; a low-noise amplifier (LNA) configured to amplify the received wakeup impulse sequence; an IF processing circuit comprising an envelope detector configured to convert the received wakeup impulse sequence into a multi-tone IF signal comprising a fundamental response, a plurality of harmonic responses, and a noise response; a multi-path filter circuit configured to eliminate one or more of the plurality of harmonic responses and the noise response from the multi-tone IF signal to thereby output a filtered IF signal comprising the fundamental response and a subset of the plurality of harmonic responses; and a baseband processing circuit configured to generate a signal detection indication based on the filtered IF signal.
Clause 17. The wireless communication system of clause 16, wherein the multi-path filter circuit comprises: a plurality of bandpass filters each configured to reject the noise response and pass a respective one of the fundamental response and the subset of the plurality of harmonic responses; and a combiner coupled to the plurality of bandpass filters and configured to output the filtered IF signal comprising the fundamental response and the subset of the plurality of harmonic responses.
Clause 18. The wireless communication system of clause 16 or 17, wherein the multi-path filter circuit is an N-path filter circuit configured to reject the noise response and pass a respective one of the fundamental response and the subset of the plurality of harmonic responses to thereby output the filtered IF signal comprising the fundamental response and the subset of the plurality of harmonic responses.
Clause 19. A transmitter circuit configured to transmit a wakeup impulse signal to a receiver circuit, wherein the wakeup impulse signal comprises a preamble comprising a plurality of preamble symbols each comprising a pulse burst.
Clause 20. The transmitter circuit of clause 19, wherein the pulse burst further comprises: a start frame delimiter (SFD) comprising at least one SFD symbol; and an address comprising a plurality of address symbols.
Clause 21. The transmitter circuit of clause 20, wherein the address symbols comprise one or more error detection symbols.
Clause 22. The transmitter circuit of clause 19, 20 or 21, wherein the pulse burst comprises a plurality of chip intervals of an identical chip interval duration and each comprises a pulse.
Clause 23. The transmitter circuit of any of clauses 19 to 22, wherein the pulse burst has a duration of four microseconds or eight microseconds.

Those skilled in the art will recognize improvements and modifications to the preferred embodiments of the present disclosure. All such improvements and modifications are considered within the scope of the concepts disclosed herein and the claims that follow.

## Claims

1. A receiver circuit comprising:
a main receiver circuit; and
a wakeup receiver circuit configured to:
detect a wakeup impulse sequence received by an antenna circuit;
determine whether the wakeup impulse sequence is intended to wake up the receiver circuit; and
wake up the main receiver circuit in the receiver circuit in response to determining that the wakeup impulse sequence is intended to wake up the receiver circuit.

2. The receiver circuit of claim 1, wherein the wakeup impulse sequence comprises a preamble, a start bit, and an address each modulated based on on-off-key (OOK) modulation, wherein:
the preamble comprises a plurality of preamble symbols each comprising a respective one of a plurality of pulse bursts;
the start bit comprises a start bit symbol that does not include the pulse burst; and
the address comprises a plurality of address symbols modulated to collectively represent a receiver identification.

3. The receiver circuit of claim 2, wherein each of the plurality of preamble symbols has a substantially longer duration than the respective one of the plurality of pulse bursts.

4. The receiver circuit of claim 2 or 3, wherein the wakeup receiver circuit is further configured to:
detect one or more of the plurality of pulse bursts in one or more of the plurality of preamble symbols in the preamble, respectively;
detect the start bit symbol after detecting the one or more of the plurality of pulse bursts;
detect the plurality of address symbols after detecting the start bit; and
determine that the wakeup impulse sequence is intended to wake up the receiver circuit in response to determining that the receiver identification represented by the address matches an identification of the receiver circuit.

5. The receiver circuit of claim 4, wherein the wakeup receiver circuit is further configured to:
detect a first pulse burst among the one or more of the plurality of pulse bursts;
predict, based on a location of the detected first pulse burst in a first preamble symbol among the one or more of the plurality of preamble symbols, a predicted location of each pulse burst subsequent to the first pulse burst among the one or more of the plurality of pulse bursts in a respective subsequent preamble among the one or more of the plurality of preamble symbols;
determine a power-saving duty cycle based on the predicted location of each pulse burst subsequent to the first pulse burst among the one or more of the plurality of pulse bursts; and
detect each pulse burst subsequent to the first pulse burst among the one or more of the plurality of pulse bursts based on the determined power-saving duty cycle.

6. The receiver circuit of claim 2 or any claim dependent thereon, wherein the wakeup receiver circuit comprises:
a wakeup signal detector circuit configured to detect the plurality of preamble symbols, the start bit symbol, and the plurality of address symbols;
a decoder circuit configured to decode the receiver identification represented by the plurality of address symbols; and
a control circuit configured to:
determine that the wakeup impulse sequence is intended to wake up the receiver circuit in response to the decoded receiver identification identifying the receiver circuit; and
generate a wakeup signal to wake up the main receiver circuit.

7. The receiver circuit of claim 6, wherein the wakeup signal detector circuit comprises:
a match circuit configured to impedance match the antenna circuit;
a low-noise amplifier (LNA) configured to amplify the received wakeup impulse sequence;
an IF processing circuit comprising an envelope detector configured to convert the received wakeup impulse sequence into a multi-tone IF signal comprising a fundamental response, a plurality of harmonic responses, and a noise response;
a multi-path filter circuit configured to eliminate one or more of the plurality of harmonic responses and the noise response from the multi-tone IF signal to thereby output a filtered IF signal comprising the fundamental response and a subset of the plurality of harmonic responses; and
a baseband processing circuit configured to generate a signal detection indication based on the filtered IF signal.

8. The receiver circuit of claim 7, wherein the multi-path filter circuit comprises:
a plurality of bandpass filters each configured to reject the noise response and pass a respective one of the fundamental response and the subset of the plurality of harmonic responses; and
a combiner coupled to the plurality of bandpass filters and configured to output the filtered IF signal comprising the fundamental response and the subset of the plurality of harmonic responses.

9. The receiver circuit of claim 7 or 8, wherein the multi-path filter circuit is an N-path filter circuit configured to reject the noise response and pass a respective one of the fundamental response and the subset of the plurality of harmonic responses to thereby output the filtered IF signal comprising the fundamental response and the subset of the plurality of harmonic responses.

10. A wireless communication system comprising:
a transmitter circuit configured to transmit a wakeup impulse sequence; and
the receiver circuit of any preceding claim.

11. A transmitter circuit configured to transmit a wakeup impulse signal to a receiver circuit, wherein the wakeup impulse signal comprises a preamble comprising a plurality of preamble symbols each comprising a pulse burst.

12. The transmitter circuit of claim 19, wherein the pulse burst further comprises:
a start frame delimiter (SFD) comprising at least one SFD symbol; and
an address comprising a plurality of address symbols.

13. The transmitter circuit of claim 11, wherein the address symbols comprise one or more error detection symbols.

14. The transmitter circuit of claim 11, 12 or 13, wherein the pulse burst comprises a plurality of chip intervals of an identical chip interval duration and each comprises a pulse.

15. The transmitter circuit of any of claims 11 to 14, wherein the pulse burst has a duration of four microseconds or eight microseconds.
